# EUROPEAN PATENT SPECIFICATION

(11) **EP 3 629 862 B1**
(45) Date of publication and mention of the grant of the patent: **24.03.2021**
(21) Application number: 18728464.1
(22) Date of filing: 30.05.2018
(51) Int. Cl.: A47J 37/06

(54) **AUTONOMOUS APPARATUS TO COOK FOOD**
AUTONOME VORRICHTUNG ZUM KOCHEN VON NAHRUNGSMITTELN
APPAREIL AUTONOME DESTINÉ À LA CUISSON D'ALIMENTS

(30) Priority: 31.05.2017 IT 201700059845
(43) Date of publication of application: 08.04.2020
(73) Proprietor: De' Longhi Appliances S.r.l. Con Unico Socio, 31100 Treviso (IT)
(72) Inventor: DE' LONGHI, Giuseppe, 31100 Treviso (IT); MAZZON, Renzo, 31100 Treviso (IT)
(74) Representative: Petraz, Gilberto Luigi
(86) International application number: PCT/IT2018/050095
(87) International publication number: WO 2018/220659

(56) References cited:
- WO-A1-2017/072068
- US-A1- 2014 245 897
- US-A1- 2017 016 623

## Description

### FIELD OF THE INVENTION

The present invention concerns an autonomous apparatus to cook food comprising a support body, a lid that can be opened/closed with respect to the support body and a container for the food.

The autonomous apparatus also comprises at least one heating device and at least one ventilation device.

The present invention also concerns a method for cooking food which uses the autonomous apparatus.

### BACKGROUND OF THE INVENTION

In the domestic field, autonomous apparatuses to cook food are known, comprising a support body and an internal container open at the top.

The support body is provided with a lid to create, together with the container, a cooking chamber with a controlled atmosphere suitable for the cooking to be performed.

The controlled atmosphere is generated by at least one heating device, that is, a producer of thermal energy, and a ventilation device to transfer the thermal energy inside the container.

In autonomous apparatuses it is known to have the heating device and the ventilation device disposed above the container, that is to say, disposed inside the cooking chamber.

Normally, during a cooking process, a user sets a determinate cooking temperature, while the rotation speed of the ventilation device is normally fixed, that is, deriving from factory settings.

However, it has been found that if the rotation speed of the ventilation device is not adequate for the cooking process in progress, in particular with determinate types of food, cooking is not performed correctly.

Moreover, in known devices this speed is not normally correlated to temperature thresholds set in the cooking chamber.

For some types of recipes, a rotation speed that is too low does not distribute the heat uniformly inside the cooking chamber, causing incorrect cooking of the food.

For other types of food, on the other hand, an excessively high rotation speed generates a whirling flow of air which causes an accumulation of the food most concentrated in the center, determining insufficient cooking and causing an unpleasant appearance of the food once the process of cooking is finished.

Moreover, a single setting of the speed of the fan also determines an excessive or inefficient heat exchange, negatively affecting the correct cooking of the food and causing, for example, a consequent incorrect browning or goldening of the food itself, which determines both an insufficient aesthetic appearance of the final product, and also an incorrect cooking, in particular not uniform cooking on the whole product.

This problem is particularly important in the so-called "multicooking" cooking apparatuses, that is, cooking apparatuses that are designed to carry out very different cooking processes, and with very different types of food, including meat, vegetables, cakes, pizzas, pastries, etc., which therefore require regulations to the cooking parameters in order to optimize the process, but without making the control and setting system of the cooking apparatus extremely complex and expensive.

WO 2017/072068, US 2017/016623 and US 2014/245897 concern cooking apparatuses in which there is a control unit suitable to regulate both the heating elements and also the ventilation device according to pre-determined cooking programs. These regulations can be made by means of a user interface.

One purpose of the present invention is to provide an autonomous apparatus that guarantees optimal cooking of foods that are also very different from each other, and with very different cooking processes.

Another purpose of the present invention is to provide an autonomous apparatus that provides easy setting of the cooking instructions for a user.

Another purpose is to perfect a method which provides optimal cooking of the food, also making the food pleasant from an aesthetic point of view.

Another purpose is to obtain all of the above without complicating the design of the apparatus and without creating complications of setup for the user.

Another purpose is to perfect a method for cooking food that facilitates at least the setting of some parameters of the cooking process for a user.

Another purpose is to perfect a method that guarantees the correct selection of the parameter values that affect the cooking process.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, the present invention concerns an autonomous apparatus to cook food comprising a support body, a lid associated with the support body and mobile with respect thereto, and a container positioned inside the support body, wherein the lid, in the closed condition together with the container, defines a cooking chamber.

The autonomous apparatus also comprises at least one upper heating device, that is, located above the container, and at least one ventilation device associated with the upper heating device, in order to move the heat according to a desired circuit also in relation to the food present in the container.

According to one aspect of the present invention, the autonomous apparatus also comprises a regulation device comprising a first actuation element configured to assume at least two angular positions to set a corresponding rotation speed of the ventilation device, and a second actuation element configured to set a threshold temperature value in order to activate/deactivate the upper heating device, wherein the threshold temperature, thanks to the drive of the regulation device, is functionally correlated to the set rotation speed of the ventilation device.

According to the present invention, therefore, following the setting carried out by the regulation device, a defined threshold temperature corresponds to a defined rotation speed of the ventilation device, the correspondence between said two parameters being pre-defined.

Advantageously, therefore, the regulation device in accordance with the present invention, by means of a single drive, allows to set at least the rotation speed and the threshold temperature for the optimal functioning of the autonomous apparatus.

According to one embodiment, the regulation device is configured to allow a user to select a type of recipe such as to correspond to a determinate rotation speed of the ventilation device and a determinate threshold temperature.

In this way, by means of a suitable setting, a rotation speed of the ventilator, fixed and pre-set, will correspond to a determinate threshold temperature, and will be suitable for the type of cooking and of food being cooked or heated at that moment, thus avoiding the disadvantages cited above.

According to a variant embodiment, the auxiliary heat generating devices also consist of a lower heating device, or electric resistance, installed, for example, on the internal wall of the support body, and which cooperates with the bottom of the container; in accordance with one embodiment of the present invention, the functioning of the lower heating device can be managed by the same regulation device described above, according to the settings imparted to the upper heating device, and following the commands supplied by a control and command unit that manages the functioning of the apparatus.

In one embodiment, the container has a support edge that cooperates with circumferential support means associated with the external wall of the support body to create a compartmentation between the internal wall of the container and the intermediate chamber, preventing splashes or anything else from entering the intermediate chamber.

In addition, the container can be associated with a handle that can have one or more positions with respect to the container, for easier manipulation.

According to a variant embodiment, the support body has an internal containing wall that cooperates with the container to create an intermediate chamber.

The intermediate chamber has the advantage, on the one hand, of reducing the empty space around the container, reducing any dispersions, and on the other hand, of being able to position auxiliary heat generating devices very near the container.

The present invention also concerns a regulation device installable in the autonomous apparatus.

The present invention also concerns a method to cook food using said cooking apparatus.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a section view of an autonomous apparatus to cook food;
- fig. 2 is a partial section view of the autonomous apparatus of fig. 1;
- fig. 3 is a perspective view of a lid of the autonomous apparatus in a disassembled condition according to one embodiment;
- fig. 4 is a perspective view of a lid of the autonomous apparatus in a disassembled condition according to another embodiment.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

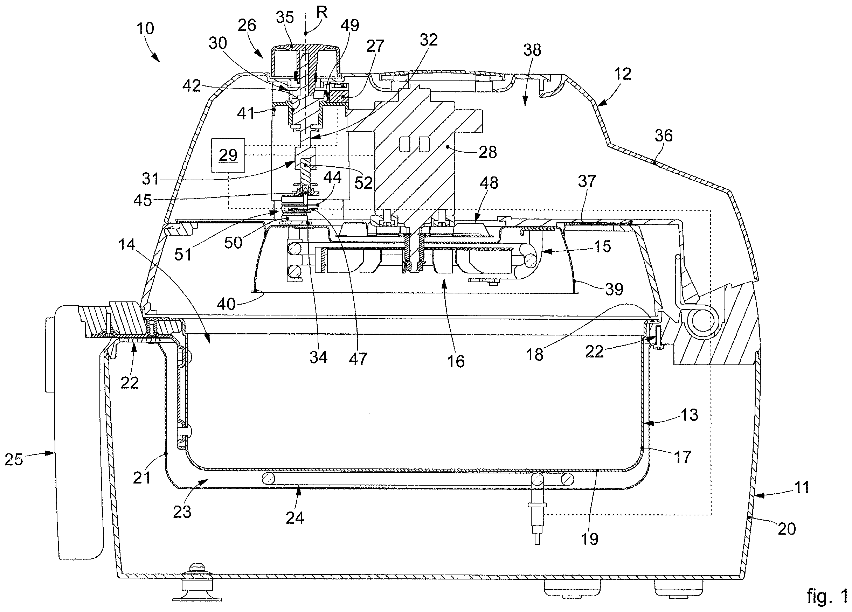

Embodiments described here in figs. 1-4 concern an autonomous apparatus 10 to cook food.

The autonomous apparatus 10 comprises a support body 11, a lid 12 which can be opened/closed with respect to the support body 11 and a container 13 which can be removed from the support body 11.

The autonomous apparatus 10 also comprises at least one upper heating device 15, located above the container 13, and at least one ventilation device 16 associated with the upper heating device 15.

According to a preferred embodiment, the upper heating device 15 can be a wire-type electrical resistance configured circular.

In particular, the upper heating device 15 can be associated circumferentially with the ventilation device 16.

The autonomous apparatus 10 comprises a motor member 28 which drives the ventilation device 16.

According to a preferred embodiment, the motor member 28 can be installed above the ventilation device 16.

The container 13 is open at the top and has a lateral wall 17 defined at the upper part by a support edge 18 and at the lower part by a bottom wall 19.

The support body 11 comprises an external wall 20 and an internal wall 21, adjacent to the container 13 during use.

The internal wall 21 is configured in such a way as to be able to receive the container 13 inside it.

The support body 11 has circumferential support means 22 associated with the external wall 20.

The circumferential support means 22 are configured to support the support edge 18 of the container 13.

The association of the internal wall 21 and the container 13, in the condition when the support edge 18 is in contact with the circumferential support means 22, defines an intermediate chamber 23.

According to a preferred embodiment, the autonomous apparatus 10 comprises a lower heating device 24 associated with the bottom wall 19 of the container 13 to cook the food.

In particular, the lower heating device 24 can be installed inside the intermediate chamber 23 to transfer heat toward the container 13.

According to an example embodiment shown in fig. 1, the container 13 can have a handle 25 configured to assume one or more positions with respect to the container 13.

The handle 25 is advantageously configured to cooperate at least at one point with the circumferential support means 22 and to make the support of the container 13 to the support body 11 more stable.

According to embodiments described here, the autonomous apparatus 10 can comprise a mixing device installed inside the container 13 and configured to mix the food.

The lid 12 in its closed condition defines, in cooperation with the container 13, a cooking chamber 14 for the food.

For example, the lid 12 can be hinged to the support body 11 in correspondence with the circumferential support means 22.

The lid 12 can be defined at least by an external casing 36 whose circumferential edge can be associated with the circumferential support means 22 in the closed condition of the lid 12.

According to one embodiment, the lid 12 can be defined by the external casing 36 associated with a wall 37, facing toward the cooking chamber 14.

The association of the external casing 36 and the wall 37 defines a containing compartment 38.

According to a preferred embodiment, the motor member 28 can be installed inside the containing compartment 38.

According to another embodiment, inside the containing compartment 38 an auxiliary ventilation device 48 can be installed, to cool the motor member 28 and the containing compartment 38 itself.

The auxiliary ventilation device 48 can be installed coaxially with the ventilation device 16.

According to another embodiment, a deflector element 39 can be associated with the wall 37.

The deflector element 39 can have at least one opening 40 facing toward the cooking chamber 14 and is configured to receive inside it the upper heating device 15 and the ventilation device 16.

The deflector element 39 is configured to convey the flow of hot air generated by the ventilation device 16 toward the food contained in the container 13.

According to one aspect of the present invention, the autonomous apparatus 10 comprises a regulation device 26 comprising a first actuation element 30, configured to assume at least two angular positions to set a corresponding rotation speed of the ventilation device 16.

The regulation device 26 also comprises a second actuation element 31 configured to allow to set a threshold temperature value to activate/deactivate the upper heating device 15, in which the threshold temperature is in this way functionally correlated to the set rotation speed of the ventilation device 16.

By the expression "functionally correlated" we mean that the regulation device 26 allows, through a single drive, to set at least two independent parameters simultaneously, that is, the rotation speed of the ventilation device 16 and the threshold temperature of the upper heating device 15.

According to one embodiment, the first actuation element 30 is an eccentric element 49.

According to one embodiment, the regulation device 26 is configured to have an axis of rotation R around which it rotates to assume said at least two angular positions.

The regulation device 26 comprises a rotating shaft 32 configured to transmit the rotation imparted by a user to the first actuation element 30 and to the second actuation element 31.

According to a variant embodiment, the rotating shaft 32 can be made in one piece.

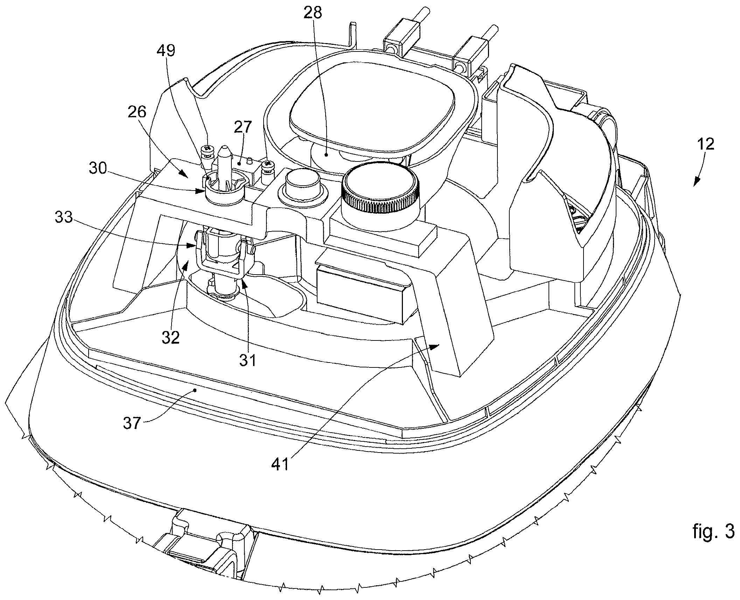

According to another variant embodiment, the rotating shaft 32 can be a universal joint 33 (fig. 3) configured to prevent possible mechanical damage of the second actuation element 31 because of stresses due to the non-alignment of the components with the axis of rotation R.

According to a preferred embodiment, the first actuation element 30 is installed integrally with the rotating shaft 32. In particular, the first actuation element 30 is keyed to the rotating shaft 32.

The second actuation element 31 is connected to one end of the rotating shaft 32 in an opposite position with respect to the first actuation element 30.

In particular, in the solutions shown by way of example only and therefore not restrictive of the field of the present invention, the first actuation element 30 is disposed in the upper part of the rotating shaft 32, while the second actuation element 31 is disposed in the lower part of the rotating shaft 32.

According to a preferred embodiment, the second actuation element 31 comprises a substantially C-shaped attachment element which connects to a spindle 52 of the thermostat assembly 51, to influence the operation of the latter as a function of the rotation performed by the rotating shaft 32 and then transmitted to the second actuation element 31.

In particular, the spindle 52 is associated with a first pin 45 of the thermostat assembly 51 by means of a threaded coupling.

In this way, by rotating the rotary shaft 32 of the regulation device 26, the second actuation element 31 imparts a corresponding rotation to the spindle 52, which in turn causes a longitudinal translation of the first pin 45.

The entity of longitudinal movement depends, for example, on the pitch of the threaded coupling.

Thanks to this configuration, by acting on the regulation device 26, the first actuation element 30 determines a pre-set rotation speed of the ventilation device 16 and at the same time the second actuation element 31 determines a pre-set threshold temperature according to the setting made on the thermostat unit 51 by the axial displacement of the first pin 45.

According to one embodiment, the angular position of the regulation device 26 corresponds to a type of recipe, for which a determinate rotation speed of the ventilation device 16 and a determinate threshold temperature of the upper heating device 15 are defined.

By type of recipe we mean the preparation of food by baking, frying, or suchlike.

For example, one type of recipe can correspond to a rotation speed of the ventilation device 16 from 5 m/s to 15 m/s and a threshold temperature from 150°C to 190°C, or a rotation speed of 15 m/s to 25 m/s and a temperature from 190°C to 205°C, or a rotation speed from 25 m/s to 35 m/s and a threshold temperature from 205°C to 215°C.

According to one embodiment, the regulation device 26 can comprise at least one knob 35 configured to facilitate the rotation of the regulation device 26 by a user.

For example, the knob 35 can be provided with graphic information to facilitate the user in choosing the type of recipe.

It is easy to understand, therefore, how by acting on the knob 35 the first actuation element 30, for example a cam, can be used to act on the contacts of an electronic board (not shown) to select one of a plurality of rotation speeds of the ventilation device 16, and at the same time the second actuation element 32 interacts with the first pin 45 to set one of a plurality of threshold temperatures at which the thermostat unit 51 intervenes.

The autonomous apparatus 10 comprises at least one switching element 27 configured to selectively interfere with the first actuation element 30 according to its angular position.

According to a preferred embodiment, the eccentric element 49 of the first actuation element 30 is configured to be eccentric with respect to the axis of rotation R so as to be able to selectively interfere with the switching element 27.

For example, the eccentric element 49 can be a cam element.

The switching element 27 can be, for example, a switch, or a microswitch configured to assume an on/off state, zero/one, true/false, or suchlike.

According to one embodiment shown by way of example in figs. 1 and 3, the autonomous apparatus 10 can comprise a single switching element 27 to select two combinations of rotation speeds of the ventilation device 16.

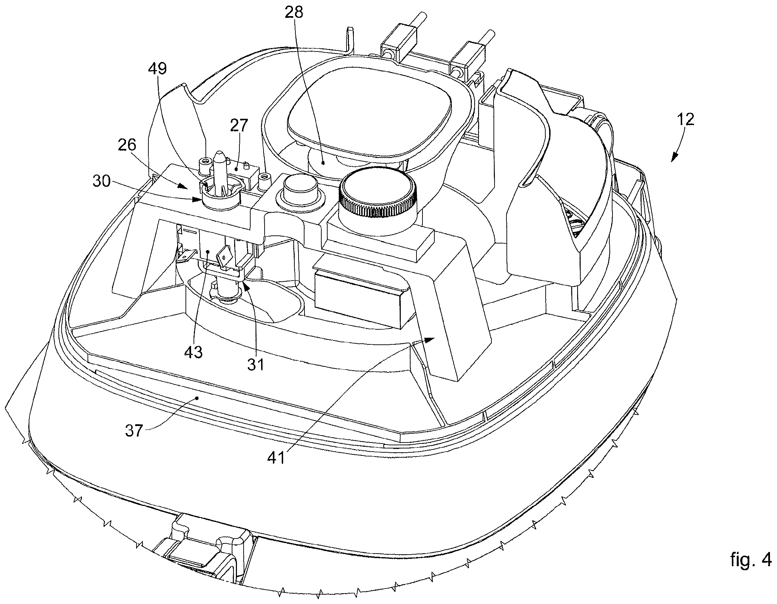

According to another embodiment, the autonomous apparatus 10 can comprise two switching elements 27 to select four combinations of different rotation speeds of the ventilation device 16.
According to another embodiment shown by way of example in fig. 4, the autonomous apparatus 10 can comprise a switching element 27 and/or a multi-selector element 43.

For example, the multi-selector element 43 is configured to have a plurality of contacts and according to the angular position of the regulation device 26 it is possible to open/close the contacts present inside it.

According to a preferred embodiment, the autonomous apparatus 10 comprises a control and command unit 29 configured to communicate at least with the switching element 27, possibly also with the multi-selector element 43, and with the motor member 28 of the ventilation device 16.

According to another embodiment, the control and command unit 29 is also configured to communicate with the lower heating device 24, for example to determine its operating cycle based on pre-set parameters and possibly dependent on the momentary condition of functioning of the upper heating device 15 as determined by the regulation device 26.

According to one embodiment, the multi-selector element 43 is connected to the control and command unit 29 to send signals to it which define the rotation speed of the ventilation device 16.

According to another embodiment, the control and command unit 29 can be connected directly to the upper heating device 15 in order to directly control its functioning, for example to determine a deactivation thereof in the event of overheating.

According to a preferred embodiment, the control and command unit 29 is installed inside the containing compartment 38.

The thermostat assembly 51, of a known type, is associated with the regulation device 26 in the manner described above and is configured to open/close an electric energy supply circuit to the upper heating device 15 as a function of a variation in temperature that deviates from the set threshold temperature value.

The thermostat assembly 51 comprises the spindle 52 and the first pin 45 connected to the spindle 52, in which the spindle 52 is connected to the second actuation element 31 of the regulation device 26 by means of the C-shaped element described above.

By rotating the regulation device 26, the axial displacement of the first pin 45 is determined, which acts on an elastic element 44 which can be associated with a switching element 47, configured to open/close the electrical energy supply circuit to the upper heating device 15.

The thermostat unit 51, if of the mechanical type, can also comprise a sensitive element, for example a bimetallic lamina 34 or a fluid, in which the temperature variation causes a deformation thereof. In this way, the sensitive element directly determines the open/closed condition of the energy supply circuit to the upper heating device 15 by interacting with the switching element 47.

The thermostat assembly 51 can also be of an electronic type, for example a resistor, or a semiconductor element.

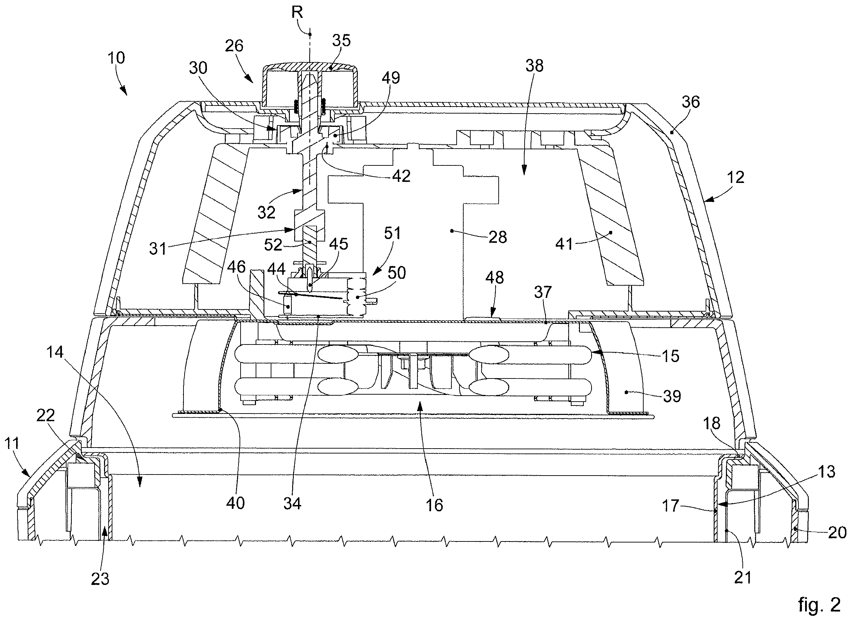

According to a preferred solution shown by way of example in figs. 1 and 2, the thermostat assembly 51 can comprise at least one bimetal lamina 34 configured to be sensitive to temperature variations.

The pressure exerted by the first pin 45 on the elastic element 44 is correlated to a determinate pre-set threshold temperature, in which a determinate pressure value exerted by the first pin 45 on the elastic element 44 corresponds to a determinate positioning of the first pin 45 along the axis of rotation R.

The thermostat unit 51, in the shown solution, also comprises a second pin 46 directly connected to the bimetal lamina 34.

On the basis of the deformation undergone by the bimetal lamina 34, the second pin 46 acts on the elastic element 44, exerting a pressure of opposite direction with respect to the pressure exerted by the first pin 45.

The sum of the pressures exerted by the first pin 45 and the second pin 46 of the thermostat assembly 51 takes the elastic element 44 to activate/deactivate contact with the switching element 47 which closes or opens the current supply circuit to the upper heating device 15.

From the above, it can therefore be seen how the threshold temperature can be selected by acting on the regulation device 26.

According to embodiments described here, the regulation device 26 can be installed at least partially inside the containing compartment 38.

In particular, the regulation device 26 is installed in such a way that the thermostat assembly 51 is disposed in proximity or in contact with the wall 37 of the lid 12. In particular, the bimetal lamina 34 determines the contact with the wall 37 of the lid 12.

More particularly, the regulation device 26 is installed in a portion of the wall 37 of the lid 12 such that the thermostat assembly 51 is disposed opposite the upper heating device 15 with respect to the wall 37 itself.

In this way, advantageously, the bimetal lamina 34 is directly influenced by the temperature inside the cooking chamber 14, and therefore allows to detect possible differences in temperature with respect to the set threshold temperature.

In accordance with embodiments described here, the containing compartment 38 can comprise a support structure 41 configured to have at least one through seating 42 in which at least the regulation device 26 is installed.

The support structure 41 can be attached, for example, in correspondence with the wall 37 of the lid 12.

In this way, advantageously, the regulation device 26 remains stable in its position without being influenced by possible thrusts which could cause misalignments during rotation.

For example, the regulation device 26 can be installed in the through seating 42 near the first actuation element 30.

According to one embodiment, the support structure 41 can be configured to install other selectors which allow to vary the functioning parameters of the food cooking process, for example a timer, or a selector to activate/deactivate the lower heating device 24, or suchlike.

According to a variant embodiment, the rotating shaft 32 is configured to rotate around the axis of rotation R and to translate longitudinally with respect to the axis of rotation R and to assume at least two vertical positions.

The two vertical positions can position the regulation device 26, in particular the first actuation element 30, in correspondence with a specific switching element 27, or to interfere with a specific contact of the multi-selector element 43.

For example, two switching devices 27 can be disposed one above the other, that is, longitudinally with respect to the axis of rotation R.

By means of the two vertical positions it is possible to invert the setting ratios of the rotation speed of the ventilation device 16 and the threshold temperature of the upper heating device 15.

For example, in a vertical position an inverse relation is established between the rotation speed and the threshold temperature, that is, an increase in the rotation speed corresponds to a decrease in the threshold temperature and vice versa; whereas with the second vertical position a direct relation is established between the rotation speed and the threshold temperature, that is, an increase in the rotation speed corresponds to an increase in the threshold temperature and vice versa.

We will now give an example of the functioning of the autonomous apparatus 10, in which a user rotates the knob 35 of the regulation device 26 in correspondence with a symbol, image, or information in general, which encodes a determinate type of cooking.

The knob 35 transmits the rotation to the rotating shaft 32 which determines an angular position of the regulation device 26.

The first actuation element 30 interferes with the switching element 27 which transmits a signal to the control and command unit 29.

The control and command unit 29, according to programmed instructions, sends a command signal to the motor member 28 to drive the ventilation device 16 at a determinate speed. Based on programmed functions, the control and command unit 29 can also set functioning cycles of the lower heating device 24 which can be correlated or independent with respect to the drive of the upper heating device 15.

The rotation of the rotating shaft 32 determines the displacement along the axis of rotation R of the first pin 45 so that it can exert a determinate pressure on the elastic element 44 corresponding to a pre-set threshold temperature.

During functioning, the bimetallic lamina 34 associated with the elastic element 44 by means of the second pin 46 closes the supply circuit of the upper heating device 15.

It is clear that modifications and/or additions of parts can be made to the autonomous apparatus 10 as described heretofore, without departing from the field and scope of the present invention.

For example, the knob 35 can be configured to assume two positions, longitudinally with respect to the axis of rotation R, where in each position the regulation device 26 can regulate only the threshold temperature, or only the rotation speed of the ventilation device 16.

It is also clear that, although the present invention has been described with reference to some specific examples, a person of skill in the art shall certainly be able to achieve many other equivalent forms of autonomous apparatus 10, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Autonomous apparatus to cook food comprising a support body (11), a lid (12) associated with said support body (11) and mobile with respect thereto, and a container (13) positioned inside said support body (11), wherein said lid (12) in the closed condition together with said container (13) defines a cooking chamber (14), said autonomous apparatus also comprising at least one upper heating device (15), located above said container (13), and at least one ventilation device (16) associated with said upper heating device (15), and a thermostat unit (51) configured to activate/deactivate said upper heating device (15) according to whether a threshold temperature inside said cooking chamber (14) is reached or not, **characterized in that** it comprises a regulation device (26) comprising a first actuation element (30) configured to assume at least two angular positions to set a corresponding rotation speed of said at least one ventilation device (16), and a second actuation element (31), mechanically connected to said first actuation element (30) and configured to act mechanically on said thermostat unit (51) to condition the value of said threshold temperature in a manner functionally correlated to the value of the rotation speed of said at least one ventilation device (16) determined by the position of said first actuation element (30).

2. Autonomous apparatus as in claim 1, **characterized in that** said first actuation element (30) is an eccentric element (49).

3. Autonomous apparatus as in claim 1 or 2, **characterized in that** said regulation device (26) comprises a rotating shaft (32) configured to transmit the rotation imparted by a user to said first actuation element (30) and to said second actuation element (31), **and in that** said first actuation element (30) is installed integrally with said rotating shaft (32) and said second actuation element (31) is connected to one end of said rotating shaft (32) in an opposite position with respect to said first actuation element (30).

4. Autonomous apparatus as in any claim hereinbefore, **characterized in that** it comprises at least one switching element (27) configured to selectively interfere with said first actuation element (30) depending on its angular position.

5. Autonomous apparatus as in claim 4, **characterized in that** it comprises two switching elements (27) configured to select four different combinations of rotation speeds of said at least one ventilation device (16).

6. Autonomous apparatus as in claim 4, **characterized in that** it comprises a switching element (27) and/or a multi-selector element (43) configured to include a plurality of contacts which are opened/closed according to the angular position of said first actuation element (30).

7. Autonomous apparatus as in claim 6, **characterized in that** it comprises a control and command unit (29) configured to communicate at least with said at least one switching element (27), possibly also with said multi-selector element (43), and with a motor member (28) to drive said at least one ventilation device (16).

8. Autonomous apparatus as in claim 7, **characterized in that** said control and command unit (29) is configured to drive a lower heating device (24).

9. Autonomous apparatus as in any claim hereinbefore, **characterized in that** the rotation of said regulation device (26) corresponds to a type of recipe such as to set a determinate rotation speed of said at least one ventilation device (16) and a determinate threshold temperature of said at least one upper heating device (15).

10. Autonomous apparatus as in any of the claims from 3 to 9, **characterized in that** said rotating shaft (32) is configured to rotate around an axis of rotation (R) and to translate longitudinally with respect to said axis of rotation (R) and assume at least two vertical positions.

11. Regulation device installable in an autonomous apparatus to cook food as in any of the claims hereinbefore, **characterized in that** it comprises a first actuation element (30) configured to assume at least two angular positions to set a corresponding rotation speed of said at least one ventilation device (16), and a second actuation element (31), mechanically connected to said first actuation element (30) and configured to condition the value of a threshold temperature of a thermostat unit (51) in a manner functionally correlated to the value of the rotation speed of said at least one ventilation device (16) and determined by the position of said first actuation element (30).

12. Method to cook food using an autonomous apparatus (10) comprising a support body (11), a lid (12) associated with said support body (11) and mobile with respect thereto, and a container (13) positioned inside said support body (11), wherein said lid (12) in the closed condition together with said container (13) defines a cooking chamber (14), said autonomous apparatus (10) also comprising at least one upper heating device (15), located above said container (13), and at least one ventilation device (16) associated with said at least one upper heating device (15), the method providing to:
- generate heat inside said cooking chamber (14) by means of said at least one upper heating device (15);
- generate a flow of air inside said cooking chamber (14) by means of said at least one ventilation device (16),
**characterized in that** it also provides to:
- rotate a regulation device (26);
- set a rotation speed of said at least one ventilation device (16) by means of a first actuation element (30), comprised in said regulation device (26), based on at least two angular positions assumed by said first actuation element (30);
- set a threshold temperature by means of a second actuation element (31), comprised in said regulation device (26), and mechanically connected to said first actuation element (30), in order to act on a thermostat unit (51) configured to activate/deactivate said at least one upper heating device (15) according to whether a threshold temperature is reached or not, wherein the value of said threshold temperature is modified by said second actuation element (31) in a manner functionally correlated to the value of the set rotation speed of said at least one ventilation device (16).

## Patentansprüche

1. Autonome Vorrichtung zum Kochen von Nahrungsmitteln, umfassend einen Stützkörper (11), einen Deckel (12), der mit dem Stützkörper (11) verbunden und in Bezug auf diesen beweglich ist, und einen Behälter (13), der im Inneren des Stützkörpers (11) positioniert ist, wobei der Deckel (12) im geschlossenen Zustand zusammen mit dem Behälter (13) eine Kochkammer (14) definiert, wobei die autonome Vorrichtung außerdem mindestens eine oberhalb des Behälters (13) angeordnete obere Heizvorrichtung (15) und mindestens eine mit der oberen Heizvorrichtung (15) verbundene Belüftungsvorrichtung (16) umfasst, und eine Thermostateinheit (51), die so konfiguriert ist, dass sie, in Abhängigkeit davon, ob eine Schwellentemperatur im Inneren der Kochkammer (14) erreicht ist oder nicht, die obere Heizvorrichtung (15) aktiviert/deaktiviert, **dadurch gekennzeichnet, dass** sie eine Regulationsvorrichtung (26) umfasst, die ein erstes Aktivierungselement (30) umfasst, das so konfiguriert ist, dass es mindestens zwei Winkelstellungen annimmt, um eine entsprechende Rotationsgeschwindigkeit der mindestens einen Belüftungsvorrichtung (16) festzulegen, und ein zweites Aktivierungselement (31) umfasst, das mechanisch mit dem ersten Aktivierungselement (30) verbunden und so konfiguriert ist, dass es mechanisch auf die Thermostateinheit (51) wirkt, um den Wert der Schwellentemperatur in einer mit dem Wert der durch die Stellung des ersten Aktivierungselements (30) festgelegten Rotationsgeschwindigkeit der mindestens einen Belüftungsvorrichtung (16) funktional korrelierten Art und Weise zu bestimmen.

2. Autonome Vorrichtung gemäß Anspruch 1, **dadurch gekennzeichnet, dass** das erste Aktivierungselement (30) ein Exzenterelement (49) ist.

3. Autonome Vorrichtung gemäß Anspruch 1 oder 2, **dadurch gekennzeichnet, dass** die Regulationsvorrichtung (26) eine Rotationswelle (32) umfasst, die so konfiguriert ist, dass sie die durch einen Benutzer übermittelte Rotation an das erste Aktivierungselement (30) und an das zweite Aktivierungselement (31) überträgt, und dass das erste Aktivierungselement (30) integral mit der Rotationswelle (32) installiert ist und das zweite Aktivierungselement (31) mit einem Ende der Rotationswelle (32) in einer in Bezug auf das erste Aktivierungselement (30) entgegengesetzten Position verbunden ist.

4. Autonome Vorrichtung gemäß irgendeinem vorhergehenden Anspruch, **dadurch gekennzeichnet, dass** sie mindestens ein Schaltelement (27) umfasst, das so konfiguriert ist, dass es auf das erste Aktivierungselement (30) in Abhängigkeit von seiner Winkelstellung selektiv einwirkt.

5. Autonome Vorrichtung gemäß Anspruch 4, **dadurch gekennzeichnet, dass** sie zwei Schaltelemente (27) umfasst, die so konfiguriert sind, dass sie vier unterschiedliche Kombinationen von Rotationsgeschwindigkeiten der mindestens einen Belüftungsvorrichtung (16) auswählen.

6. Autonome Vorrichtung gemäß Anspruch 4, **dadurch gekennzeichnet, dass** sie ein Schaltelement (27) und/oder ein Multiselektor-Element (43) umfasst, das so konfiguriert ist, dass es eine Vielzahl an Kontakten einschließt, die entsprechend der Winkelstellung des ersten Aktivierungselements (30) geöffnet/geschlossen sind.

7. Autonome Vorrichtung gemäß Anspruch 6, **dadurch gekennzeichnet, dass** es eine Steuer- und Befehlseinheit (29) umfasst, die so konfiguriert ist, dass sie zumindest mit dem mindestens einen Schaltelement (27), gegebenenfalls ebenso mit dem Multiselektor-Element (43) und mit einem Motorelement (28) zum Antrieb der mindestens einen Belüftungsvorrichtung (16) kommuniziert.

8. Autonome Vorrichtung gemäß Anspruch 7, **dadurch gekennzeichnet, dass** die Steuer- und Befehlseinheit (29) so konfiguriert ist, dass sie eine untere Heizvorrichtung (24) ansteuert.

9. Autonome Vorrichtung gemäß irgendeinem vorhergehenden Anspruch, **dadurch gekennzeichnet, dass** die Rotation der Regulationsvorrichtung (26) einem Rezepttyp entspricht, so dass eine bestimmte Rotationsgeschwindigkeit der mindestens einen Belüftungsvorrichtung (16) und eine bestimmte Schwellentemperatur der mindestens einen oberen Heizvorrichtung (15) festgelegt werden.

10. Autonome Vorrichtung gemäß irgendeinem der Ansprüche 3 bis 9, **dadurch gekennzeichnet, dass** die Rotationswelle (32) so konfiguriert ist, dass sie um eine Rotationsachse (R) rotiert und sich in Längsrichtung in Bezug auf die Rotationsachse (R) verschiebt und mindestens zwei vertikale Stellungen annimmt.

11. Regulationsvorrichtung, die in einer autonomen Vorrichtung zum Kochen von Nahrungsmitteln gemäß irgendeinem der vorhergehenden Ansprüche installiert werden kann, **dadurch gekennzeichnet, dass** sie ein erstes Aktivierungselement (30) umfasst, das so konfiguriert ist, dass es mindestens zwei Winkelstellungen annimmt, um eine entsprechende Rotationsgeschwindigkeit der mindestens einen Belüftungsvorrichtung (16) festzulegen, und ein zweites Aktivierungselement (31) umfasst, das mechanisch mit dem ersten Aktivierungselement (30) verbunden und so konfiguriert ist, dass es den Wert der Schwellentemperatur einer Thermostateinheit (51) in einer mit dem Wert der durch die Stellung des ersten Aktivierungselements (30) festgelegten Rotationsgeschwindigkeit der mindestens einen Belüftungsvorrichtung (16) in einer funktional korrelierten Art und Weise bestimmt.

12. Verfahren zum Kochen von Nahrungsmitteln unter Verwendung einer autonomen Vorrichtung (10) umfassend einen Stützkörper (11), einen Deckel (12), der mit dem Stützkörper (11) verbunden und in Bezug auf diesen beweglich ist, und einen Behälter (13), der im Inneren des Stützkörpers (11) positioniert ist, wobei der Deckel (12) im geschlossenen Zustand zusammen mit dem Behälter (13) eine Kochkammer (14) definiert, wobei die autonome Vorrichtung (10) außerdem mindestens eine oberhalb des Behälters (13) angeordnete obere Heizvorrichtung (15) und mindestens eine mit der mindestens einen oberen Heizvorrichtung (15) verbundene Belüftungsvorrichtung (16) umfasst, wobei das Verfahren bereitstellt:
- Erzeugen von Wärme im Inneren der Kochkammer (14) mittels der mindestens einen oberen Heizvorrichtung (15);
- Erzeugen eines Luftstroms im Inneren der Kochkammer (14) mittels der mindestens einen Belüftungsvorrichtung (16);
**dadurch gekennzeichnet, dass** es ferner bereitstellt:
- Rotieren einer Regulationsvorrichtung (26);
- Festlegen einer Rotationsgeschwindigkeit der mindestens einen Belüftungsvorrichtung (16) mit Hilfe eines von der Regulationsvorrichtung (26) umfassten ersten Aktivierungselements (30) basierend auf mindestens zwei von dem ersten Aktivierungselement (30) angenommenen Winkelstellungen;
- Festlegen einer Schwellentemperatur mit Hilfe eines von der Regulationsvorrichtung (26) umfassten zweiten Aktivierungselements (31), das mechanisch mit dem ersten Aktivierungselement (30) verbunden ist, um auf eine Thermostateinheit (51) zu wirken, die so konfiguriert ist, dass sie, in Abhängigkeit davon, ob eine Schwellentemperatur im Inneren der Kochkammer (14) erreicht ist oder nicht, die obere Heizvorrichtung (15) aktiviert/deaktiviert, wobei der Wert der Schwellentemperatur durch das zweite Aktivierungselement (31) in einer mit dem Wert der festgelegten Rotationsgeschwindigkeit der mindestens einen Belüftungsvorrichtung (16) funktional korrelierten Art und Weise modifiziert wird.

## Revendications

1. Appareil autonome de cuisson d'aliments comprenant un corps de support (11), un couvercle (12) associé audit corps de support (11) et mobile par rapport à celui-ci, et un récipient (13) positionné à l'intérieur dudit corps de support (11), où ledit couvercle (12) à l'état fermé conjointement avec ledit récipient (13) définit une chambre de cuisson (14), ledit appareil autonome comprenant également au moins un dispositif de chauffage supérieur (15), situé au-dessus dudit récipient (13), et au moins un dispositif de ventilation (16) associé audit dispositif de chauffage supérieur (15), et une unité de thermostat (51) configurée pour activer/désactiver ledit dispositif de chauffage supérieur (15) selon qu'une température de seuil à l'intérieur de ladite chambre de cuisson (14) est atteinte ou non, **caractérisé en ce qu'**il comprend un dispositif de régulation (26) comprenant un premier élément d'actionnement (30) configuré pour prendre au moins deux positions angulaires pour régler une vitesse de rotation correspondante dudit au moins un dispositif de ventilation (16), et un second élément d'actionnement (31), relié mécaniquement audit premier élément d'actionnement (30) et configuré pour agir mécaniquement sur ladite unité de thermostat (51) pour conditionner la valeur de ladite température de seuil d'une manière fonctionnellement corrélée à la valeur de la vitesse de rotation dudit au moins un dispositif de ventilation (16) déterminée par la position dudit premier élément d'actionnement (30).

2. Appareil autonome selon la revendication 1, **caractérisé en ce que** ledit premier élément d'actionnement (30) est un élément excentrique (49).

3. Appareil autonome selon la revendication 1 ou 2, **caractérisé en ce que** ledit dispositif de régulation (26) comprend un arbre rotatif (32) configuré pour transmettre la rotation conférée par un utilisateur audit premier élément d'actionnement (30) et audit second élément d'actionnement (31), **et en ce que** ledit premier élément d'actionnement (30) est installé d'un seul tenant avec ledit arbre rotatif (32) et ledit second élément d'actionnement (31) est relié à une extrémité dudit arbre rotatif (32) dans une position opposée par rapport audit premier élément d'actionnement (30).

4. Appareil autonome selon l'une quelconque des revendications précédentes, **caractérisé en ce qu'**il comprend au moins un élément de commutation (27) configuré pour interférer sélectivement avec ledit premier élément d'actionnement (30) en fonction de sa position angulaire.

5. Appareil autonome selon la revendication 4, **caractérisé en ce qu'**il comprend deux éléments de commutation (27) configurés pour sélectionner quatre combinaisons différentes de vitesses de rotation dudit au moins un dispositif de ventilation (16).

6. Appareil autonome selon la revendication 4, **caractérisé en ce qu'**il comprend un élément de commutation (27) et/ou un élément multi-sélecteur (43) configuré pour inclure une pluralité de contacts qui sont ouverts/fermés selon la position angulaire dudit premier élément d'actionnement (30).

7. Appareil autonome selon la revendication 6, **caractérisé en ce qu'**il comprend une unité de contrôle et de commande (29) configurée pour communiquer au moins avec ledit au moins un élément de commutation (27), éventuellement également avec ledit élément multi-sélecteur (43), et avec un élément moteur (28) pour entraîner ledit au moins un dispositif de ventilation (16).

8. Appareil autonome selon la revendication 7, **caractérisé en ce que** ladite unité de contrôle et de commande (29) est configurée pour entraîner un dispositif de chauffage inférieur (24).

9. Appareil autonome selon l'une quelconque des revendications précédentes, **caractérisé en ce que** la rotation dudit dispositif de régulation (26) correspond à un type de recette de manière à régler une vitesse de rotation déterminée dudit au moins un dispositif de ventilation (16) et une température de seuil déterminée dudit au moins un dispositif de chauffage supérieur (15).

10. Appareil autonome selon l'une quelconque des revendications 3 à 9, **caractérisé en ce que** ledit arbre rotatif (32) est configuré pour tourner autour d'un axe de rotation (R) et pour effectuer une translation longitudinale par rapport audit axe de rotation (R) et prendre au moins deux positions verticales.

11. Dispositif de régulation pouvant être installé dans un appareil autonome pour cuire des aliments selon l'une quelconque des revendications précédentes, **caractérisé en ce qu'**il comprend un premier élément d'actionnement (30) configuré pour prendre au moins deux positions angulaires pour régler une vitesse de rotation correspondante dudit au moins un dispositif de ventilation (16), et un second élément d'actionnement (31), relié mécaniquement audit premier élément d'actionnement (30) et configuré pour conditionner la valeur d'une température de seuil d'une unité de thermostat (51) d'une manière fonctionnellement corrélée à la valeur de la vitesse de rotation dudit au moins un dispositif de ventilation (16) et déterminée par la position dudit premier élément d'actionnement (30).

12. Procédé de cuisson d'aliments d'un appareil autonome (10) comprenant un corps de support (11), un couvercle (12) associé audit corps de support (11) et mobile par rapport à celui-ci, et un récipient (13) positionné à l'intérieur dudit corps de support (11), où ledit couvercle (12) à l'état fermé conjointement avec ledit récipient (13) définit une chambre de cuisson (14), ledit appareil autonome (10) comprenant également au moins un dispositif de chauffage supérieur (15), situé au-dessus dudit récipient (13), et au moins un dispositif de ventilation (16) associé audit au moins un dispositif de chauffage supérieur (15), le procédé consistant à :
- générer de la chaleur à l'intérieur de ladite chambre de cuisson (14) au moyen dudit au moins un dispositif de chauffage supérieur (15) ;
- générer un flux d'air à l'intérieur de ladite chambre de cuisson (14) au moyen dudit au moins un dispositif de ventilation (16),
**caractérisé en ce qu'**il prévoit également de :
- faire tourner un dispositif de régulation (26) ;
- régler une vitesse de rotation dudit au moins un dispositif de ventilation (16) au moyen d'un premier élément d'actionnement (30), compris dans ledit dispositif de régulation (26), sur la base d'au moins deux positions angulaires prises par ledit premier élément d'actionnement (30) ;
- régler une température de seuil au moyen d'un second élément d'actionnement (31), compris dans ledit dispositif de régulation (26), et relié mécaniquement audit premier élément d'actionnement (30), afin d'agir sur une unité de thermostat (51) configurée pour activer/désactiver ledit au moins un dispositif de chauffage supérieur (15) selon qu'une température de seuil est atteinte ou non, où la valeur de ladite température de seuil est modifiée par ledit second élément d'actionnement (31) d'une manière fonctionnellement corrélée à la valeur de la vitesse de rotation réglée dudit au moins un dispositif de ventilation (16).
